# EUROPÄISCHE PATENTSCHRIFT

(11) **EP 2 176 901 B1**
(45) Veröffentlichungstag und Bekanntmachung des Hinweises auf die Patenterteilung: **05.09.2018**
(21) Anmeldenummer: 08759682.1
(22) Anmeldetag: 16.05.2008
(51) Int. Cl.: H01M 2/20, H01M 2/08

(54) **AKKUMULATOR**
RECHARGEABLE BATTERY
ACCUMULATEUR

(30) Priorität: 09.07.2007 DE 102007031860
(43) Veröffentlichungstag der Anmeldung: 21.04.2010
(73) Patentinhaber: Robert Bosch GmbH, 70442 Stuttgart (DE)
(72) Erfinder: MATTHIAS, Wolf, 70469 Stuttgart (DE)
(86) Internationale Anmeldenummer: PCT/EP2008/056043
(87) Internationale Veröffentlichungsnummer: WO 2009/007160

(56) Entgegenhaltungen:
- EP-A- 1 548 859
- EP-A- 1 780 819
- DE-A1-102007 031 859

## Beschreibung

Die Erfindung betrifft einen Akkumulator für handgeführte, elektromechanische Werkzeuge, wobei der Akkumulator eine Vielzahl von elektrisch miteinander verbundenen Akkuzellen aufweist. Ferner betrifft die Erfindung ein elektromechanisches Werkzeug mit einem erfindungsgemäßem Akkumulator.

Als elektromechanische Werkzeuge werden alle handgeführten, transportablen, elektrisch betriebenen Handwerkzeuge bezeichnet, bei welchen ein Motor einen meist untrennbaren Bestandteil des Werkzeugs darstellt. Dies betrifft z. B. Bohrmaschinen, Akkuschrauber, Kreis- und Stichsägen, Winkelschleifer und andere Schleifmaschinen sowie je nach Auslegungsart diverse Gartengeräte, wie z. B. elektrische Heckenscheren. Akkumulatoren bzw. Batterien für solche Werkzeuge sollten eine möglichst hohe Kapazität aufweisen, einen robusten Aufbau, der auch härteren Stößen widersteht, besitzen sowie einfach und darüber hinaus auch kostengünstig herstellbar sein.

Elektrische Verbindungen von Akkuzellen bzw. Akkupackzellen innerhalb eines Akkumulators werden im Stand der Technik über separate Zellverbinder ausgeführt. Hierdurch ergibt sich insbesondere bei Akkumulatoren mit einer Vielzahl von Akkuzellen ein hoher Montageaufwand sowie Probleme beim Positionieren der Zellverbinder. Werden die elektrischen Zellverbinder vor einem Verschweißen mit den Polen der Akkuzellen nicht mittels eines separaten Vorrichtungsrahmens vorfixiert bzw. nicht mittels Spann- oder Halteelementen an den Akkuzellen gehalten, so können sich geometrische Ungenauigkeiten beim Positionieren der Zellverbinder ergeben. Hieraus ergeben sich Qualitätsprobleme mit den Akkumulatoren und in einem späteren Gebrauch kann eine erhöhte Ausfallwahrscheinlichkeit des Akkumulators auftreten.

Die DE 100 03 740 C1 offenbart eine Batterie mit einer Wärmeabführeinrichtung, wobei in der Batterie eine Mehrzahl von Batteriezellen miteinander verschaltet sind. Die betreffenden Batteriezellen sind parallel geschaltet, und jeweils drei Batteriezellen sind mittels eines Zellverbinders elektrisch verbunden und bilden ein Batteriezellpaket. Die Batteriezellpakete der Batterie sind mittels Strombrücken elektrisch verbunden und dabei in Serie geschaltet. Die elektrischen Zellverbinder und Strombrücken sind dabei jeweils separat innerhalb der Batterie vorgesehen. Für eine Abfuhr von in der Batterie erzeugter Wärme wird an wenigstens einer Stirnseite der Batterie eine ebene Kühlplatte vorgesehen, die mit den Zellverbindern und Strombrücken wenigstens mittelbar in thermischem Kontakt steht.

Die EP 1 548 859 A2 offenbart eine Batteriepackung mit zumindest einer Batteriezelle, mit einem Deckelgehäuse und einem Bodengehäuse. Sowohl das Deckelgehäuse als auch das Bodengehäuse weisen dabei Rippen auf, die zur formschlüssigen Fixierung der Batteriezellen ausgebildet sind. Um eine Verbindung zwischen benachbarten Batteriezellen herzustellen werden Leiterplatten eingefügt, die insbesondere die Batteriezellen untereinander verbinden sollen. Diese Leiterplatten können anschließend in Ausnehmungen sowohl des Bodengehäuses als auch des Deckelgehäuses eingelegt und mit den benachbarten Batteriezellen verbunden werden.

Es ist eine Aufgabe der Erfindung, einen verbesserten Akkumulator anzugeben. Insbesondere ist es eine Aufgabe der Erfindung, einerseits auf ein Vorfixieren der separaten elektrischen Zellverbinder an den Akkuzellen zu verzichten ohne dabei andererseits Qualitätseinbußen bei der Herstellung des Akkumulators in Kauf nehmen zu müssen. Darüber hinaus ist es eine Aufgabe der Erfindung, einen robusten und kostengünstigen Akkumulator anzugeben, der darüber hinaus schnell herstellbar sein soll. Ferner ist es eine Aufgabe der Erfindung, ein elektromechanisches Werkzeug mit einem erfindungsgemäßen Akkumulator zu realisieren.

Die Aufgabe der Erfindung wird mittels eines Akkumulators gemäß Anspruch 1 und eines elektromechanischen Werkzeugs gemäß Anspruch 10 gelöst.

Erfindungsgemäß wird für eine vereinfachte, schnellere und kostengünstigere Montage des Akkumulators, ein elektrischer Zellverbinder für Akkuzellen des Akkumulators an einem aus Kunststoff bestehenden Zellverbinderrahmen festgelegt, welcher an einer Polseite des Akkumulators vorsehbar ist. Hierbei bilden der Zellverbinder und der Zellverbinderrahmen die erfindungsgemäße elektrische Zellverbindung, mittels welcher die Akkuzellen elektrisch verbindbar sind. Erfindungsgemäß wird dabei der Zellverbinderrahmen an den oder an die Zellverbinder an-, um- oder hintergespritzt. Erfindungsgemäß werden die im Stand der Technik üblichen, separaten Zellverbinder durch eine Kunststoffumspritzung in Form eines Rahmens miteinander verbunden, wodurch ein integriertes Bauteil, bestehend aus mehreren Zellverbindern und dem Zellverbinderrahmen, entsteht.

Hierdurch wird insbesondere der Aufwand bei einer Akkumulatormontage reduziert, wobei eine gleichbleibende Qualität der Schweißverbindungen der einzelnen Akkuzellen mit den elektrischen Zellverbindern garantiert ist, da der Zellverbinderrahmen an einem Zellcluster des Akkumulators exakt positionierbar ist. Durch die Montagefreundlichkeit der erfindungsgemäßen Zellverbindung ergeben sich sichere elektrische Zellverbindungen bei geringen Qualitätsschwankungen. Hierdurch ist der Akkumulator und die Zellverbindung preisgünstig, wirtschaftlich und zuverlässig. Die erfindungsgemäße Zellverbindung ist bezüglich Temperatur- und elektrischem Isolationsverhalten gut auslegbar. Ferner ist die Zellverbindung durch eine Beeinflussung einer Geometrie ihres Zellverbinderrahmens sicher und zuverlässig, da diese auf die Notwendigkeiten innerhalb des Akkumulators abstimmbar ist.

Die erfindungsgemäße Zellverbindung weist bevorzugt rechteckige oder kreisförmige Durchgangsausnehmungen auf, an bzw. in welchen Kontaktabschnitte der elektrischen Zellverbinder angeordnet sind. Diese Durchgangsausnehmungen sind bei einer montierten Zellverbindung an bzw. über den Polen der Akkuzellen des Akkumulators angeordnet. Durch die jeweilige Durchgangsausnehmung ist der betreffende Kontaktabschnitt für ein Schweißwerkzeug, insbesondere eine Schweißelektrode, zugänglich, wodurch ein Pol einer Akkuzelle mit dem betreffenden Kontaktabschnitt verschweißt werden kann.

In bevorzugten Ausführungsformen der Erfindung weist der elektrische Zellverbinder einen gekrümmten Übergangsabschnitt auf, wobei die Kontaktabschnitte der Zellverbindung federnd auf den Polen der Akkuzelle ansitzen können. Hierdurch wird ein Verschweißen der Kontaktabschnitte mit den betreffenden Polen vereinfacht. Es ist bei ebenen Zellverbindern natürlich möglich, die Kontaktabschnitte ebenfalls als Federkontakte auszubilden.

Mittels z. B. Vorsprüngen und/oder Ausnehmungen auf derjenigen Seite des Zellverbinderrahmens, welcher den Polen der Akkuzellen zugewandt ist, kann die erfindungsgemäße Zellverbindung an/auf den Akkuzellen positioniert werden. D. h. mittels eines an oder in den Zellverbinderrahmen an- bzw. eingeformten Befestigungsabschnitts ist es möglich, den Zellverbinderrahmen schnell und einfach an den Akkuzellen zu positionieren. Anschließend werden die Kontaktabschnitte der elektrischen Zellverbinder mit dem Polen der Akkuzellen verschweißt. Bei Ausführungsformen der Erfindung kann die Zellverbindung mit einer oder einer Mehrzahl von Akkuzellen, und/oder mit einem Gehäuse des Akkumulators verrastet, verclipst oder verklebt sein.

Ferner können bei der erfindungsgemäßen Zellverbindung die Zellverbinder abschnittsweise innerhalb des Zellverbinderrahmens befestigt bzw. vorgesehen sein, und/oder die Zellverbinder können abschnittsweise bündig mit einer Außenseite der Zellverbindung abschließen. Bei letzterer Ausführungsform ergibt sich meist eine Platzersparnis gegenüber der Erstgenannten. Die blanken Abschnitte der Zellverbinder können von einem Gehäuse des Akkumulators oder separat elektrisch isoliert werden.

Weitere bevorzugte Ausführungsformen der Erfindung ergeben sich aus den übrigen abhängigen Ansprüchen.

Die Erfindung wird im Folgenden anhand von Ausführungsbeispielen unter Bezugnahme auf die beigefügte Zeichnung näher erläutert. In der Zeichnung zeigen:
- Fig. 1: eine erste Ausführungsform einer erfindungsgemäßen Zellverbindung in einer Draufsicht;
- Fig. 2: die Zellverbindung aus Fig. 1 in einem Montagezustand auf einer Mehrzahl von Akkuzellen in einer teilweise geschnittenen Seitenansicht;
- Fig. 3: eine zweite Ausführungsform der erfindungsgemäßen Zellverbindung in einem Montagezustand auf einer Mehrzahl von Akkuzellen, in einer teilweise geschnittenen Seitenansicht; und
- Fig. 4: eine dritte Ausführungsform der erfindungsgemäßen Zellverbindung in einer Draufsicht.

Die Erfindung wird im Folgenden anhand eines Akkumulators für handgeführte elektromechanische Werkzeuge näher erläutert. Die Erfindung soll jedoch nicht auf solche handgeführten Werkzeuge beschränkt sein, sondern generell Akkumulatoren betreffen. So ist die Erfindung z. B. auf Akkumulatoren für Kraftfahrzeuge mit Verbrennungsmotoren oder Antriebe von Elektrokraftfahrzeugen anwendbar. Ferner ist es z. B. möglich, die Erfindung auf Akkumulatoren für portable elektronische Geräte, Antriebe, z. B. Antriebe im Modellbau, Mobiltelefone, Kameras und Ähnliches einzusetzen.

Wenn im Folgenden der Begriff Zellverbinder verwendet wird, so soll dabei auch der Begriff Zellanschluss für einen Pol des Akkumulators mitumfasst sein, d. h. die Erfindung betrifft auch denjenigen Abschnitt eines Akkumulators, an welchem der Zellverbinder in Form eines Akkumulatorpols an einer Außenseite des Akkumulators sichtbar ist. Ferner bezeichnen gestrichelte Linien in der Zeichnung unsichtbare Kanten. Strichpunktierte Linien hingegen betreffen optionale bzw. zusätzliche Ausführungsformen der Erfindung.

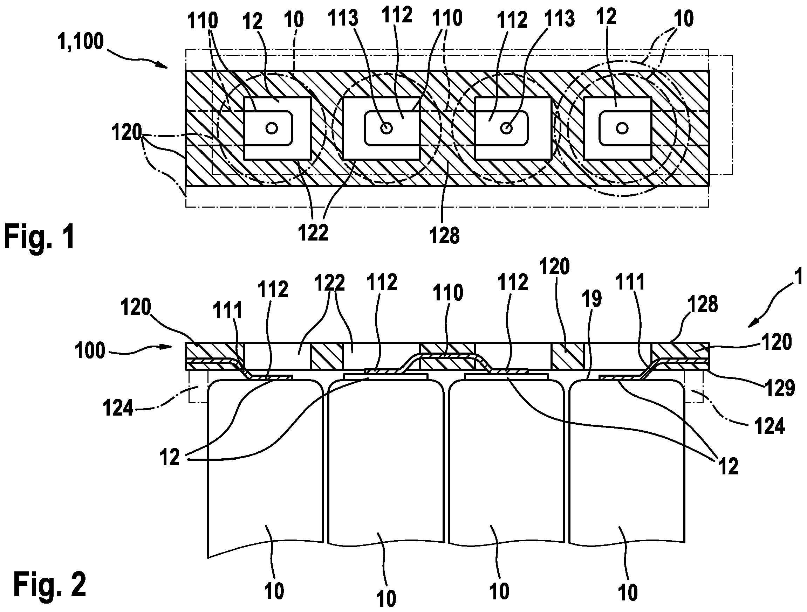

Die Fig. 1 und 2 zeigen einen Akkumulator 1 bzw. einen Akkustrang 1 bzw. ein Akkupaket 1 bzw. eine Batterie 1, wobei ein Gehäuse des Akkumulators 1 nicht dargestellt ist. Der Akkumulator 1 weist vier Akkuzellen 10 auf, wobei eine elektrische Verbindung zweier Akkuzellen 10 über einen elektrischen Zellverbinder 110 erfolgt. Es ist selbstverständlich möglich, den Akkumulator 1 mit mehr oder weniger Akkuzellen 10 zu versehen sowie diese je nach Bedarf elektrisch in Reihe oder parallel zu schalten.

Die bevorzugt flach und bevorzugt bandförmig ausgebildeten elektrischen Zellverbinder 110 sind an einer Polseite 19 der Akkuzellen 10 des Akkumulators 1 vorgesehen. Hierbei sind die Zellverbinder 110 zu einem Teil an und/oder innerhalb eines Zellverbinderrahmens 120 angeordnet. D. h. der Zellverbinderrahmen 120 und die Zellverbinder 110 sind zu einem Bauteil zusammengefasst. Hierbei besteht der Zellverbinderrahmen 120 aus einem elektrischen Isolationsmaterial und ist aus einem Kunststoff aufgebaut. Insbesondere ist dabei der Zellverbinderrahmen 120 an die einzelnen Zellverbinder 110 mittels eines Spritzgussverfahrens an-, um- oder hintergespritzt.

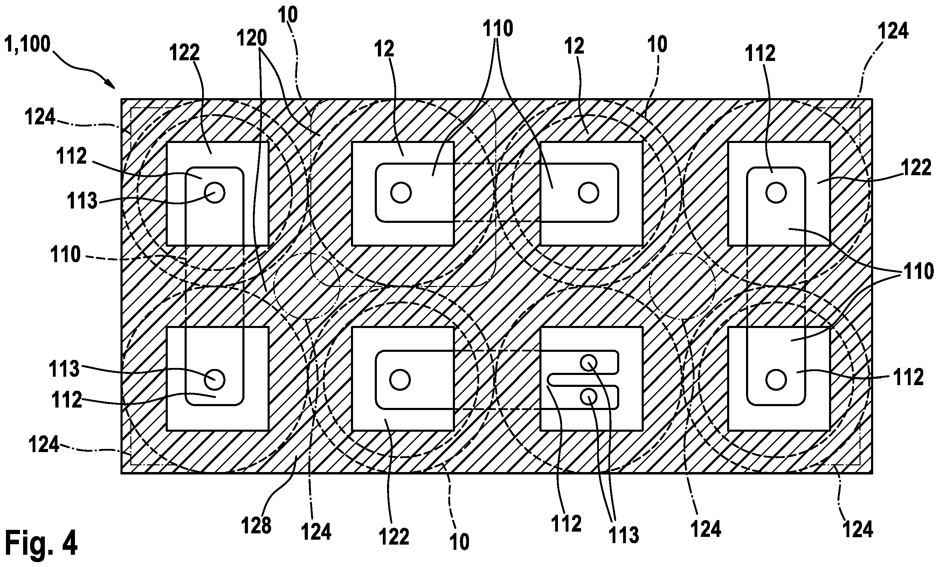

Die elektrischen Zellverbinder 110 und der erfindungsgemäße Zellverbinderrahmen 120 ergeben zusammen die erfindungsgemäße Zellverbindung 100, die an der Polseite 19 der Akkuzellen 10 ansitzt. Hierbei kontaktieren Kontaktabschnitte 112 der Zellverbinder 110 die Akkuzellen 10 an einem jeweiligen elektrischen Pol 12. Bevorzugt sind dabei die Kontaktabschnitte 112 mit dem jeweiligen Pol 12 verschweißt, bevorzugt punktverschweißt. Es ist jedoch auch möglich, anderweitig einen elektrischen Kontakt eines Kontaktabschnitts 112 mit dem betreffenden Pol 12 zu realisieren, was z. B. auch nur über Federkräfte geschehen kann. Schweißpunkte 113 der Kontaktabschnitte 112 mit den Polen 12 sind in den Fig. 1 und 4 zu erkennen.

Insbesondere wenn die Kontaktabschnitte 112 mit den Polen 12 verschweißt werden sollen, weißt der Zellverbinderrahmen 120 Durchgangsausnehmungen 122 auf, damit ein Schweißwerkzeug (Schweißhorn, Elektrode, Sonotrode) in den zu verschweißenden Bereich eines Kontaktabschnitts 112 mit dem betreffenden Pol 12 gelangen kann. Hierfür sind die Durchgangsausnehmungen 122 an bzw. in einem Bereich des Zellverbinderrahmens 120 vorgesehen, an bzw. in welchem die Kontaktabschnitte 112 der elektrischen Zellverbinder 110 vorgesehen sind. Die Durchgangsausnehmungen 122 sind z. B. kreis-, ellipsen- oder rechteckförmig; beliebige Formen der Durchgangsausnehmungen 122 sind natürlich anwendbar. Wird auf ein Verschweißen der Kontaktabschnitte 112 mit den Polen 12 verzichtet, so können die Durchgangsausnehmungen 122 weggelassen werden und die Zellverbindung 100 einen Teil des Gehäuses des Akkumulators 1 bilden.

Im in Fig. 2 dargestellten Ausführungsbeispiel sind die elektrischen Zellverbinder 110 mit einem Abschnitt innerhalb des Zellverbinderrahmens 120 befestigt. Der im Bereich der Durchgangsausnehmung 122 befindliche Bereich des Zellverbinders 110 ist dabei bevorzugt über einen gekrümmten Übergangsabschnitt 111 in einen Bereich der Durchgangsausnehmung 122 geführt. Hierbei ist es bevorzugt, dass der gekrümmte Übergangsabschnitt 111 den Kontaktabschnitt 112 des Zellverbinders 110 in einen Bereich unterhalb einer Unterseite 129 des Zellverbinderrahmens 120 führt. D. h. die freien Kontaktabschnitte 112 der jeweiligen Zellverbinder 110 stehen von der Unter-129 bzw. Außenseite 129 des Zellverbinderrahmens 120 ab. Hierbei liegen die Kontaktabschnitte 112 parallel zur Unterseite 129 und bevorzugt auch parallel zu einer Oberseite 128 des Zellverbinderrahmens 120.

Um einen Höhenunterschied zwischen den Akkuzellen 10 zu kompensieren, sind die jeweiligen Kontaktabschnitte 112 in zwei zueinander parallelen Ebenen angeordnet. Es ist jedoch in anderen Ausführungsformen der Erfindung möglich, sämtliche Kontaktabschnitte 112 der Zellverbinder 110 in einer Ebene anzuordnen, wobei dann auch die betreffenden Pole 12 der Akkuzellen 10 in einer Ebene angeordnet sind.

In Fig. 1 ist zu erkennen, dass die Zellverbindung 100 bzw. der Zellverbinderrahmen 120 mit seinen beiden Längsseiten mit den Akkuzellen 10 fluchtet und, wie auch in Fig. 2 zu erkennen ist, mit seinen beiden Querseiten über die jeweilige seitliche Akkuzelle 10 hinausgeht. Es ist jedoch möglich, andere Konfigurationen zu wählen. So ist es z. B. möglich, dass die Quer- und die Längsseiten des Zellverbinderrahmens 120 mit den Akkuzellen 10 fluchten, hinein oder darüber hinaus gehen (Draufsicht). Ferner ist es möglich, den Zellverbinderrahmen 120 asymmetrisch bzw. teilsymetrisch bezüglich den Akkuzellen 10 anzuordnen. Dies ist teilweise durch die gestrichelten Ausführungsformen in Fig. 1 verdeutlicht. Ferner zeigt Fig. 1 eine gegenüber den in Fig. 2 dargestellten Akkuzellen 10 vergrößerte Akkuzelle 10.

Um ein "Zentrieren" bzw. eine Vormontage der Zellverbindung 100 auf den Akkuzellen 10 zu vereinfachen, kann die Zellverbindung 100 an ihrer den Akkuzellen 10 zugewandten Seite 129 Montagevorsprünge 124 aufweisen. Diese sind in Fig. 2 strichpunktiert dargestellt. Hierbei können eine Mehrzahl von Montagevorsprüngen 124 (siehe auch Fig. 4) vorgesehen sein. Ferner ist es möglich, nur einen Montagevorsprung 124 vorzusehen, der im montierten Zustand vollständig oder nur teilweise um die Akkuzellen 10 des Akkumulators 1 herumläuft.

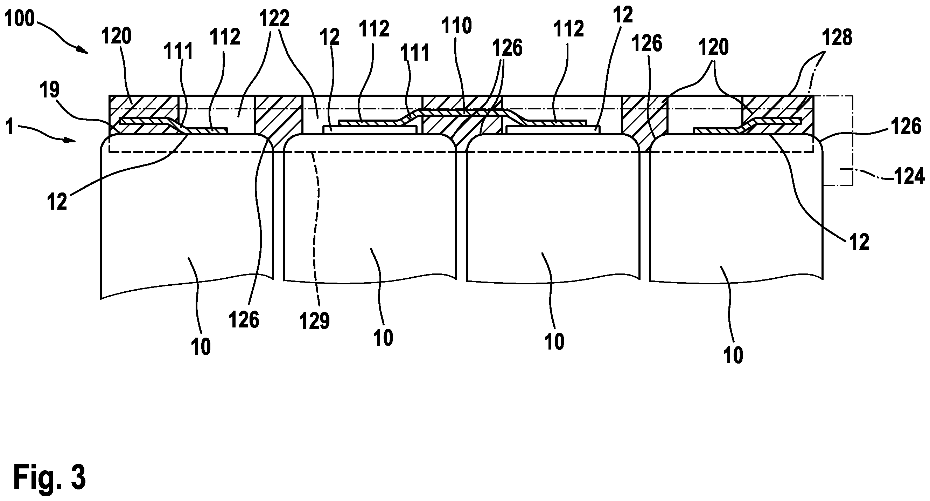

Eine andere Möglichkeit die erfindungsgemäße Zellverbindung 100 auf den Akkuzellen 10 vorzusehen, ist in Fig. 3 dargestellt. Hierbei ragen die Kontaktabschnitte 112 der elektrischen Zellverbinder 110 in die entsprechenden Durchgangsausnehmungen 122 des Zellverbinderrahmens 120 hinein. D. h. die Zellverbinder 110 sind vollständig innerhalb einer äußeren Begrenzung des Zellverbinderrahmens 120 angeordnet. Ein korrektes Ansitzen der Zellverbindung 100 auf den Akkuzellen 10 erfolgt mittels Ausnehmungen 126, die im Zellverbinderrahmen 120 vorgesehen sind. Hierbei zeichnen die Ausnehmungen 126 die betreffenden Abschnitte der Akkupackzellen 10 nach, sodass von den Ausnehmungen 126 gebildete Vorsprünge in Freiräume zwischen zwei bzw. vier Akkuzellen 10 zu liegen kommen. Wie in Fig. 3 dargestellt, kann die erfindungsgemäße Zellverbindung 100 insgesamt kürzer ausgebildet sein, als die nebeneinander angeordneten Akkuzellen 10. Ferner zeigt Fig. 3 eine Ausführungsform der Erfindung mit einem Montagevorsprung 124, der an einem Längsende des Zellverbinderrahmens 120 vorgesehen ist und sich im Montagezustand an eine oder eine Mehrzahl von Akkuzellen 10 anschmiegt.

Darüber hinaus zeigt Fig. 3 eine Ausführungsform, bei der eine Oberseite 128 (strichpunktiert) des Zellverbinderrahmens 120 mit wenigstens einem elektrischen Zellverbinder 110 (Fig. 3 Mitte, oben) fluchtet. Es ist natürlich auch möglich, dass eine Mehrzahl von oder sämtliche Zellverbinder 110 wenigstens mit einem Abschnitt mit der Oberseite 128 des Zellverbinderrahmens 120 fluchten (in der Zeichnung nicht dargestellt). Bevorzugt bei solchen Ausführungsformen der Erfindung ist, dass die Zellverbinder 110 an denjenigen Abschnitten, an welchen sie Materialkontakt mit dem Zellverbinderrahmen 120 besitzen, entsprechende Ausnehmungen, bevorzugt Durchgangsausnehmungen aufweisen, in welche der flüssige Kunststoff beim Umspritzen hineinlaufen kann, um so die Zellverbinder 110 am Zellverbinderrahmen 120 festzulegen. Dies kann natürlich auch erst bei einer Montage der Zellverbinder 110 mit einem schon fertigen Zellverbinderrahmen 120 erfolgen.

Die Fig. 4 zeigt eine Ausführungsform der erfindungsgemäßen elektrischen Zellverbindung 100, bei welcher zwei Viererreihen von Akkuzellen 10 miteinander elektrisch in Reihe geschaltet sind. Dies ist anhand der Anordnung der Pole 12 der Akkuzellen 10 zu erkennen. Eine dieser Stirnseite gegenüberliegende erfindungsgemäße Zellverbindung 100 verbindet dann die in Fig. 4 nicht dargestellten Akkuzellen 10 entsprechend. Diese Seite weist dann auch die Pole 12 des Akkumulators 1 auf. Es ist bei sämtlichen Ausführungsformen der Erfindung möglich, diese Seite des Akkumulators 1 mit herkömmlichen Zellverbindern 110 elektrisch zu verschalten.

Ferner zeigt Fig. 4 einen alternativen bevorzugten elektrischen Kontaktabschnitt 112 (Fig. 4 Mitte, unten), der zwei Zungen aufweist, wobei jede Zunge mittels eines Schweißpunkts 113 mit dem Pol 12 der Akkuzelle 10 elektrisch verbunden ist; hierbei sind die beiden Zungen über einen Spalt voneinander getrennt. Darüber hinaus zeigt Fig. 4 eine alternative Akkuzelle 10 in ihrem Querschnitt, die annähernd quadratisch bzw. angenähert rechteckig aufgebaut ist. Hierdurch kann der Platz innerhalb des Akkumulators 1 effektiver ausgenutzt werden.

Des Weitern zeigt Fig. 4 alternative Montagevorsprünge 124. Einerseits ist in sämtlichen vier Eckbereichen des Zellverbinderrahmens 120 ein solcher Montagevorsprung 124 vorgesehen. Alternativ oder zusätzlich ist es möglich, die Montagevorsprünge 124 in einem Mittenbereich des Zellverbinderrahmens 120 vorzusehen. Dies ist beispielhaft mittels zwei zapfenförmigen Montagevorsprüngen 124 dargestellt.

Die Erfindung ist natürlich auch auf nur einen einzigen elektrischen Zellverbinder 110 anwendbar, der zwei Akkuzellen 10 miteinander elektrisch verbindet. Hierbei ist der Zellverbinderrahmen 120 bevorzugt als Steg zwischen den beiden Kontaktabschnitten 112 des Zellverbinders 110 ausgebildet.

## Patentansprüche

1. Akkumulator für handgeführte, elektromechanische Werkzeuge, mit einer Mehrzahl von Akkuzellen (10), die mittels mehrerer elektrischer Zellverbinder (110) elektrisch miteinander verbunden sind, wobei für eine vereinfachte Montage der Zellverbinder (110) an den Akkuzellen (10), die Zellverbinder (110) an einem Zellverbinderrahmen (120) festgelegt sind, der an einer Polseite (19) der Akkuzellen (10) vorgesehen ist, wobei der Zellverbinderrahmen (120) aus einem Kunststoff besteht und an den Zellverbindern (110) wenigstens teilweise um- oder hinterspritzt ist, wodurch ein integriertes Bauteil entsteht.

2. Akkumulator gemäß Anspruch 1, wobei elektrische Kontaktabschnitte (112) der Zellverbinder (110) an oder in Durchgangsausnehmungen (122) des Zellverbinderrahmens (120) vorgesehen sind bzw. wenigstens teilweise in diese hineinstehen, und eine Durchgangsausnehmung (122) an/über einem Pol (12) einer Akkuzelle (10) angeordnet ist.

3. Akkumulator gemäß Anspruch 1 oder 2, wobei die Zellverbinder (110) gekrümmte Übergangsabschnitte (111) aufweisen, mittels welchen ein Sitz eines sich daran anschließenden Kontaktabschnitts (112) des Zellverbinders (110) auf einem Pol (12) einer Akkuzelle (10) gewährleistet ist.

4. Akkumulator gemäß einem der Ansprüche 1 bis 3, wobei eine den Akkuzellen (10) zugewandte Seite (129) des Zellverbinderrahmens (120) Vorsprünge (124) und/oder Ausnehmungen (126) aufweist, mittels welchen der Zellverbinderrahmen (110) auf den Akkuzellen (10) positioniert ist.

5. Akkumulator gemäß einem der Ansprüche 1 bis 4, wobei der Zellverbinderrahmen (120) mit wenigstens einer Akkuzelle (10) und/oder einem Gehäuse des Akkumulators (1) verrastet ist.

6. Akkumulator gemäß einem der Ansprüche 1 bis 5, wobei der Zellverbinder (110) mit einem Abschnitt innerhalb des Zellverbinderrahmens (120) befestigt ist.

7. Akkumulator gemäß einem der Ansprüche 1 bis 6, wobei der Zellverbinder (110) mit einem Abschnitt mit einer Außenseite (122) des Zellverbinderrahmens (120) abschließt.

8. Akkumulator gemäß einem der Ansprüche 1 bis 7, wobei der Zellverbinderrahmen (120) einstückig, bevorzugt stofflich einstückig ausgebildet ist.

9. Akkumulator gemäß Anspruch 2 bis 8, wobei die Kontaktabschnitte (112) federnd auf den Polen (12) der Akkuzelle (10) ansitzen.

10. Akkumulator gemäß Anspruch 2 bis 9, wobei die jeweiligen Kontaktabschnitte (112) in zwei zueinander parallelen Ebenen angeordnet sind, um einen Höhenunterschied zwischen den Akkuzellen (10) zu kompensieren.

11. Akkumulator gemäß Anspruch 4 bis 10, wobei die Vorsprünge (124) in Eckbereichen des Zellverbinderrahmens (120) vorgesehen sind.

12. Akkumulator gemäß Anspruch 4 bis 11, wobei die Vorsprünge (124) in einem Mittenbereich des Zellverbinderrahmens (120) vorgesehen sind.

13. Akkumulator gemäß Anspruch 4 bis 12, wobei die Vorsprünge (124) zapfenförmig ausgebildet sind.

14. Akkumulator gemäß Anspruch 1 bis 13, wobei die Quer- und/oder die Längsseiten des Zellverbinderrahmens (120) mit den Akkuzellen (10) fluchten und hinein oder darüber hinaus gehen.

15. Akkumulator gemäß Anspruch 1 bis 14, wobei die Quer- und/oder die Längsseiten des Zellverbinderrahmens (120) in die jeweiligen Akkuzellen (10) hinein gehen.

16. Akkumulator gemäß Anspruch 1 bis 15, wobei die Quer- und/oder die Längsseiten des Zellverbinderrahmens (120) über die jeweiligen Akkuzellen (10) hinaus gehen.

17. Akkumulator gemäß Anspruch 1 bis 16, wobei der Zellverbinderrahmen (120) asymmetrisch oder teilsymmetrisch bzüglich den Akkuzellen (10) angeordnet ist.

18. Akkumulator gemäß Anspruch 4 bis 17, wobei der Zellverbinderrahmen (120) Ausnehmungen (126) aufweist, die die betreffenden Abschnitte der Akkupackzellen (10) nachzeichnen, sodass von den Ausnehmungen (126) gebildete Vorsprünge in Freiräume zwischen zwei beziehungsweise vier Akkuzellen (10) zu liegen kommen.

19. Akkumulator gemäß Anspruch 3 bis 18, wobei der gekrümmte Übergangsabschnitt (111) den Kontaktabschnitt (112) des Zellverbinders (110) in einen Bereich unterhalb einer Unterseite (129) des Zellverbinderrahmens (120) führt.

20. Akkumulator gemäß Anspruch 2 bis 19, wobei die Kontaktabschnitte (112) der elektrischen Zellverbinder (110) vollständig innerhalb einer äußeren Begrenzung des Zellverbinderrahmens (122) angeordnet sind, indem die Kontaktabschnitte (112) der elektrischen Zellverbinder (110) in die entsprechenden Durchgangsausnehmungen (122) des Zellverbinders hineinragen.

21. Akkumulator gemäß Anspruch 1 bis 20, wobei eine Oberseite (128) des Zellverbinderrahmens (120) mit wenigstens einem Zellverbinder (110) fluchtet.

22. Elektromechanisches Werkzeug, insbesondere Akkuschrauber, Bohrmaschine, Kreissäge, Stichsäge, Schleifmaschine, Gartengerät, mit einem Akkumulator (1) nach einem der Ansprüche 1 bis 21.

## Claims

1. Rechargeable battery for handheld electromechanical tools, having a plurality of rechargeable-battery cells (10), which are connected electrically together by means of a plurality of electrical cell connectors (110), wherein for simplified mounting of the cell connectors (110) on the rechargeable-battery cells (10), the cell connectors (110) are secured to a cell-connector frame (120) which is provided on a pole side (19) of the rechargeable-battery cells (10), wherein the cell-connector frame (120) consists of a plastics material and is injection-moulded at least partially around or behind the cell connectors (110), resulting in an integrated component.

2. Rechargeable battery according to Claim 1, wherein electrical contact portions (112) of the cell connectors (110) are provided on or in through-apertures (122) in the cell-connector frame (120) or protrude at least partially thereinto, and a through-aperture (122) is arranged on/over a pole (12) of a rechargeable-battery cell (10).

3. Rechargeable battery according to Claim 1 or 2, wherein the cell connectors (110) have curved transition portions (111), by means of which a seat of an adjoining contact portion (112) of the cell connector (110) on a pole (12) of a rechargeable-battery cell (10) is ensured.

4. Rechargeable battery according to one of Claims 1 to 3, wherein a side (129), facing the rechargeable-battery cells (10), of the cell-connector frame (120) has protrusions (124) and/or recesses (126), by means of which the cell-connector frame (110) is positioned on the rechargeable-battery cells (10).

5. Rechargeable battery according to one of Claims 1 to 4, wherein the cell-connector frame (120) is latched together with at least one rechargeable-battery cell (10) and/or a housing of the rechargeable battery (1).

6. Rechargeable battery according to one of Claims 1 to 5, wherein the cell connector (110) is fastened with a portion within the cell-connector frame (120).

7. Rechargeable battery according to one of Claims 1 to 6, wherein the cell connector (110) terminates by way of a portion with an outer side (122) of the cell-connector frame (120).

8. Rechargeable battery according to one of Claims 1 to 7, wherein the cell-connector frame (120) is configured in an integral manner, preferably in a materially integral manner.

9. Rechargeable battery according to Claims 2 to 8, wherein the contact portions (112) sit on the poles (12) of the rechargeable-battery cell (10) in a resilient manner.

10. Rechargeable battery according to Claims 2 to 9, wherein the respective contact portions (112) are arranged in two mutually parallel planes, in order to compensate for a height difference between the rechargeable-battery cells (10).

11. Rechargeable battery according to Claims 4 to 10, wherein the protrusions (124) are provided in corner regions of the cell-connector frame (120).

12. Rechargeable battery according to Claims 4 to 11, wherein the protrusions (124) are provided in a central region of the cell-connector frame (120).

13. Rechargeable battery according to Claims 4 to 12, wherein the protrusions (124) are configured in a peg-like manner.

14. Rechargeable battery according to Claims 1 to 13, wherein the transverse and/or longitudinal sides of the cell-connector frame (120) are aligned with the rechargeable-battery cells (10) and transition into or go beyond the latter.

15. Rechargeable battery according to Claims 1 to 14, wherein the transverse and/or longitudinal sides of the cell-connector frame (120) transition into the respective rechargeable-battery cells (10).

16. Rechargeable battery according to Claims 1 to 15, wherein the transverse and/or longitudinal sides of the cell-connector frame (120) go beyond the respective rechargeable-battery cells (10).

17. Rechargeable battery according to Claims 1 to 16, wherein the cell-connector frame (120) is arranged in an asymmetric or partially symmetric manner with respect to the rechargeable-battery cells (10).

18. Rechargeable battery according to Claims 4 to 17, wherein the cell-connector frame (120) has recesses (126) which trace the relevant portions of the rechargeable-battery-pack cells (10), such that protrusions formed by the recesses (126) come to lie in clearances between two or four rechargeable-battery cells (10).

19. Rechargeable battery according to Claims 3 to 18, wherein the curved transition portion (111) guides the contact portion (112) of the cell connector (110) into a region beneath an underside (129) of the cell-connector frame (120).

20. Rechargeable battery according to Claims 2 to 19, wherein the contact portions (112) of the electrical cell connectors (110) are arranged entirely within an outer boundary of the cell-connector frame (122) in that the contact portions (112) of the electrical cell connectors (110) project into the corresponding through-apertures (122) in the cell connector.

21. Rechargeable battery according to Claims 1 to 20, wherein a top side (128) of the cell-connector frame (120) is aligned with at least one cell connector (110).

22. Electromechanical tool, in particular cordless screwdriver, drilling machine, circular saw, jigsaw, sander, gardening implement, having a rechargeable battery (1) according to one of Claims 1 to 21.

## Revendications

1. Batterie pour outils électromécaniques guidés à la main, dotée d'une pluralité de cellules (10), qui sont connectées les unes aux autres au moyen d'une pluralité de ponts électriques (110), dans laquelle les ponts (110) sont fixés à un cadre de pont (120) prévu à un pôle (19) des cellules (10) pour un montage simplifié des ponts (110) sur les cellules (10), dans laquelle le cadre de pont (120) est constitué de plastique et est surmoulé ou moulé par contre-injection au moins en partie sur le pont (110), résultant ainsi en une pièce intégrée.

2. Batterie selon la revendication 1, dans laquelle des sections de contact électrique (112) du pont (110) sont prévues dans ou sur des cavités de passage (122) du cadre de pont (120) ou pénètrent au moins partiellement dans celles-ci, et une cavité de passage (122) est agencée à/sur un pôle (12) d'une cellule (10).

3. Batterie selon la revendication 1 ou 2, dans laquelle les ponts (110) comportent des sections de passage (111) courbées, au moyen desquelles un ajustement d'une section de contact (112) du pont (110) s'y rattachant est assuré sur un pôle (12) d'une cellule (10).

4. Batterie selon l'une des revendications 1 à 3, dans laquelle un côté (129) du cadre de pont (120) faisant face à la cellule (10) comporte des saillies (124) et/ou des cavités (126), au moyen desquelles le cadre de pont (110) est positionné sur les cellules (10).

5. Batterie selon l'une des revendications 1 à 4, dans laquelle le cadre de pont (120) est enclenché avec au moins une cellule (10) et/ou un boîtier de la batterie.

6. Batterie selon l'une des revendications 1 à 5, dans laquelle le pont (110) est fixé avec une section à l'intérieur du cadre de pont (120).

7. Batterie selon l'une des revendications 1 à 6, dans laquelle le pont (110) est fixé avec une section avec un côté extérieur (122) du cadre de pont (120).

8. Batterie selon l'une des revendications 1 à 7, dans laquelle le pont (120) est conçu d'une pièce, de préférence d'une pièce recyclable.

9. Batterie selon l'une des revendications 2 à 8, dans laquelle les sections de contact (112) s'appuient de manière élastique sur les pôles (12) des cellules (10).

10. Batterie selon l'une des revendications 2 à 9, dans laquelle les sections de contact (112) respectives sont agencées dans deux plans parallèles l'un à l'autre, afin de compenser une différence de hauteur entre les cellules (10).

11. Batterie selon l'une des revendications 4 à 10, dans laquelle les saillies (124) sont prévues dans des zones d'angle du cadre de pont (120).

12. Batterie selon l'une des revendications 4 à 11, dans laquelle les saillies (124) sont prévues dans une zone médiane du cadre de pont (120).

13. Batterie selon l'une des revendications 4 à 12, dans laquelle les saillies (124) sont conçues de forme conique.

14. Batterie selon l'une des revendications 1 à 13, dans laquelle les côtés longitudinaux et/ou transversaux du cadre de pont (120) sont alignés avec les cellules (10) et y entrent ou les dépassent.

15. Batterie selon l'une des revendications 1 à 14, dans laquelle les côtés longitudinaux et/ou transversaux du cadre de pont (120) entrent dans les cellules (10) respectives.

16. Batterie selon l'une des revendications 1 à 15, dans laquelle les côtés longitudinaux et/ou transversaux du cadre de pont (120) dépassent les cellules (10) respectives.

17. Batterie selon l'une des revendications 1 à 16, dans laquelle le cadre de pont (120) est agencé de manière asymétrique ou partiellement symétrique par rapport aux cellules (10).

18. Batterie selon l'une des revendications 4 à 17, dans laquelle le cadre de pont (120) comporte des cavités (126), qui dessinent les sections concernées des cellules (10), de sorte que des saillies formées par les cavités (126) viennent se placer dans les espaces libres entre deux, de préférence quatre, cellules (10).

19. Batterie selon l'une des revendications 3 à 18, dans laquelle la section de passage (111) courbée guide la section de contact (112) du pont (110) dans une zone située sous la face inférieure (129) du cadre de pont (120).

20. Batterie selon l'une des revendications 2 à 19, dans laquelle les sections de contact (112) des ponts électriques (110) sont agencées entièrement à l'intérieur d'une délimitation extérieure du cadre de pont (120), les sections de contact (112) des ponts électriques (110) pénétrant dans les cavités de passage (122) correspondantes du pont.

21. Batterie selon l'une des revendications 1 à 20, dans laquelle une face supérieure (128) du cadre de pont (120) est alignée avec au moins un pont (110).

22. Outil électromécanique, en particulier visseuse-dévisseuse, perceuse, scie circulaire, scie sauteuse, ponceuse, outil de jardinage, doté d'une batterie (1) selon l'une des revendications 1 à 21.
